# EUROPEAN PATENT APPLICATION

(11) **EP 2 063 334 A1**
(43) Date of publication of application: **27.05.2009**
(21) Application number: 08166270.2
(22) Date of filing: 09.10.2008
(51) Int. Cl.: G05B 19/4067

(54) **Numerical controller for storing operating history during path table operation**

(30) Priority: 13.11.2007 JP 2007294670
(71) Applicant: Fanuc Ltd, Yamanashi 401-0597 (JP)
(72) Inventor: Endo, Takahiko, Minamitsuru-gun Yamanashi 401-0597 (JP); Egashira, Akira, Minamitsuru-gun Yamanashi 401-0597 (JP)
(74) Representative: Ward, James Norman

(57) **Abstract**

During path table operation, date and time information at sampling, the value of the reference signal, the position of an axis controlled in synchronization with the reference signal, and information on the state of the numerical controller are stored, for each predetermined sampling cycle, in buffer as operating history information. The operating history information stored in buffer is then transferred in operating history saving memory when an alarm is generated, and then displayed on a display device. By displaying operating history in this way, the location of the data instructed in path table operation, the state of the numerical controller and the position of the control axis when an alarm is generated can be specified.

## Description

### BACKGROUND OF THE INVENTION

### 1. Field of the Invention

The present invention relates to the numerical controller for performing control of path table operation.

### 2. Description of the Related Art

A signal with the variable value such as time, the principal axis position and or another axis position is set as a reference signal. The position of the control axis to the reference signal value is stored as table format data. And the control axis is drive-controlled in synchronization with the reference signal. The control system mentioned above is known as path table operation.

For example, Japanese Patent Application Laid-Open No. 2003-303005 mentions path table operation that stores the position of the control axis to the position of the reference axis (the reference signal) in a data table and drives the control axis in synchronization with the motion of the reference axis. In path table operation, the auxiliary functions and the principal axis function are set and stored with respect to the position of the reference axis and those functions are also executed in synchronization with the position of the reference axis. And the position of the reference axis is overridden and path table operation is performed on the basis of the overridden position of the reference axis.

Meanwhile, it is known to provide the numerical controller with the self-diagnosis function or the like in order to facilitate investigation of the source of alarm generation when an alarm is generated and operation has to be suspended while operation of tools such as the machine tool is being controlled by the numerical controller. For example, Japanese Utility Model Application Laid-Open No. 3-25904 mentions the numerical controller comprising the self-diagnosis function to chronologically store alarm generation history, input signal history, interpolated output history, date and time information.

When an alarm is generated and operation is stopped while the numerical controller is being operated, the numerical controller stores the alarm generation history and the operating history and so forth in order to facilitate investigation of the source of alarm generation is already known as mentioned above. However, the work of investigating the source of alarm generation is not straightforward in a conventional system for storing alarm history in cases of an alarm is generated during path table operation.

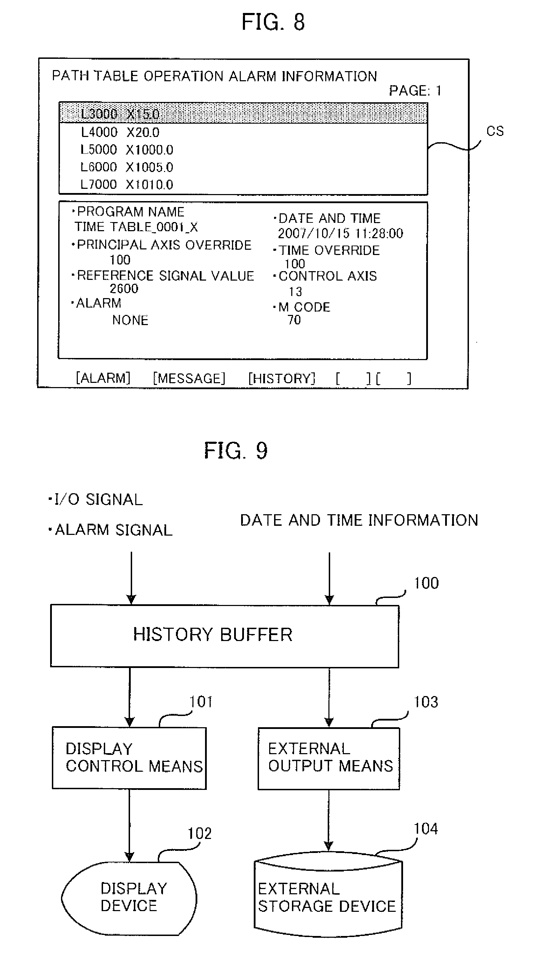

Fig. 9 shows the overview of a conventional alarm history storage method.

The processor of the numerical controller judges whether an alarm has been generated in every predetermined cycle. If an alarm is generated, the processor stores alarm signal information, I/O signal information at that time, date and time information in history buffer 100 as alarm generation history information. Thereafter, alarm generation historyinformation, which is the single unit that consists of alarm signal information, I/O signal information, date and time information, is stored in history buffer 100 whenever an alarm is generated. The history buffer 100 is constituted as ring buffer-format and alarm generation history information of the predetermined number of units is stored cyclically.

Further, the source of alarm generation is investigated by reading alarm gene rat ion history information stored in history buffer 100 with display control means 101 and displaying alarm generation history information on display device 102 or is investigated on the basis of alarm generation history information stored in external storage device 104 via external output means 103.

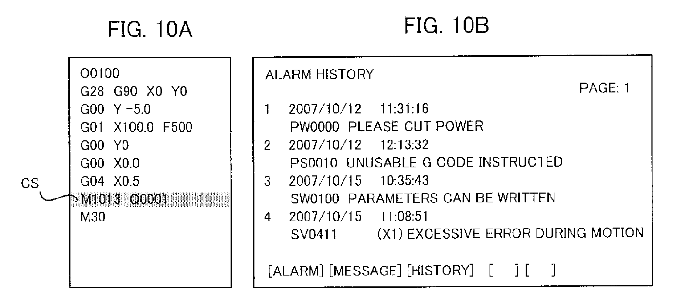

Fig. 10 shows an example in which alarm generation history information is displayed on display device 102 when investigating the source of alarm generation.

If alarm history display instruction is input to the numerical controller when an alarm is generated and operation of the numerical controller is stopped, alarm generation history information stored in history buffer 100 is displayed as shown in Fig. 10B on the screen of display device 102. Furthermore, when the screen of display device 102 is switched to the program check screen, the program which is being executed is displayed and cursor CS is displayed in the position of the program being executed, as shown in Fig. 10A.

Accordingly, when an alarm is generated, it is possible to discriminate the name of the program being executed and the program position from the program name and the position of cursor CS shown on the program check screen. In addition, previously generated alarm information and current (the latest) alarm information are displayed on the screen displaying alarm generation history information shown on Fig. 10B. In Fig. 10B, '2007/10/15 11:08:51 SV0411 (X1) excessive error during motion' is displayed as the latest alarm information and it is clear from this information that excessive error during motion SV0411 (X1) was generated at 11:08:51 on October 15 2007. In addition, previous alarm information that was generated before the (latest) alarm was generated is also displayed with the latest alarm information and is therefore useful to investigation of the source of alarm generation.

However, when an alarm is generated during path table operation, the position of cursor CS on the program check screen displays the row of path table operation start instruction. Fig. 10A shows an example in which an alarm is generated during path table operation and cursor CS is displayed on the program check screen in the position 'M1013 Q0001' which is path table operation start instruction.

Hence, when an alarm is generated during path table operation, it is only known that an alarm was generated during path table operation and it is not possible to specify the position in which an alarm was generated during path table operation.

### SUMMARY OF THE INVENTION

Therefore, an object of the present invention is to solve this problem and to make it possible to specify the position in which an alarm was generated during path table operation.

The reference signal value and the position of the control axis to the reference signal value are stored in memory as a path table in order to drive-control the control axis in synchronization with the reference signal of a variable value. The present invention relates to the numerical controller that performs path table operation to drive-control the control axis in synchronization with the reference signal based on stored path tables. The numerical controller comprises means that stores, in each predetermined sampling cycle during path table operation, the reference signal value and the position of the control axis which is in synchronization with the reference signal in buffer at the time of sampling as operating history information for predetermined period and saving memory that stores operating history information accumulated in buffer when an alarm is generated.

M code information instructed during sampling may also be extracted and used as operating history information in each predetermined sampling cycle.

The information on the state during sampling of preset terms representing the state of the numerical controller may be extracted and used as operating history information in each predetermined sampling cycle. The preset terms representing the state of the numerical controller can include the program name of a path table under execution, the state of I/O signal, the principal axis override value, the time override value.

The numerical controller can further comprise means for reading operating history information stored in the operating history saving memory and causing the display means to display operating history information. The numerical controller can also further comprise means for reading, from the program name of a path table under execution stored as operating history information, data of the path table of that program name and causing the display means to display the data of the path table A cursor can be displayed to the data that is corresponding to the data inside of the displayed path table based on the reference signal value in displayed operating history information.

The numerical controller may also comprise a plurality of memory for storing operating history and enable to store many operating history information

When an alarm is generated during path table operation, the numerical controller of the present invention stores the instruction point in path table operation connected with alarm generation and therefore facilitates investigation of the source of alarm generation. Furthermore, in addition to the states of the numerical controller when an alarm is generated and a predetermined time before the alarm generation, the numerical controller stores the position of the axis, which is drive-controlled in synchronization with the reference signal, and the instructed M codes. Hence, investigation of the source of alarm generation is further facilitated by displaying storage information and so forth.

### BRIEF DESCRIPTION OF THE DRAWINGS

The above objects and characteristics of the present invention and further objects and characteristics will become clear from the following description of the preferred embodiment with reference to the attached drawings as follows:
Fig. 1 is a block diagram illustrating an aspect in which the numerical controller of the present invention stores information of the operating history during path table operation;
Fig. 2 shows that operating history saving memory shown in Fig. 1 is divided into a plurality of storage areas and that operating history information stored in buffer shown in Fig. 1 is stored sequentially in the storage areas each time an alarm is generated;
Fig. 3 is the schematic view of an embodiment of the numerical controller of the present invention that stores information on the operating history during path table operation;
Fig. 4A shows an example of an NC program executed by numerical controller 10 shown in Fig. 3;
Figs. 4B and 4C show path table format data executed by numerical controller 10 shown in Fig. 3, where Fig. 4B shows an example of path table format data obtained by setting the position of a control axis (X) in synchronization with the reference signal to match the reference signal value and Fig. 4C shows an example of path table format data obtained by setting M code instruction (auxiliary function instruction) output in synchronization with the reference signal to match the reference signal value;
Fig. 5 is the flowchart showing an algorithm for operating history saving processing executed by CPU of the numerical controller in Fig. 3 in each predetermined sampling cycle during path table operation;
Fig. 6 is the flowchart showing an algorithm for processing to display operating history information stored in the operating history saving memory unit in memory of the numerical controller in Fig. 3 on a display device;
Fig. 7 is an example of a display of operating history information (alarm information when an alarm is generated during path table operation) displayed on the display screen of the display device of the numerical controller in Fig. 3;
Fig. 8 shows an example in which operating history prior to alarm generation is displayed by alarm information display during path table operation;
Fig. 9 is the schematic view of a conventional alarm history storage method; and
Fig. 10 is an example in which alarm generation history information is displayed by using the conventional alarm history storage method.

### DETAILED DESCRIPTION OF THE PREFERRED EMBODIMENTS

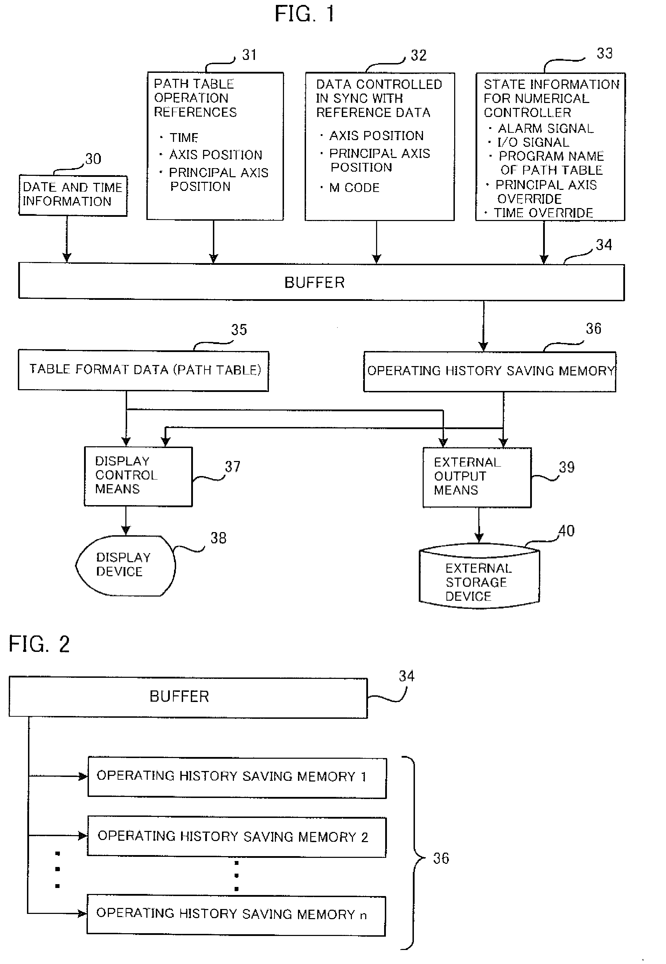

Fig. 1 is the block diagram illustrating an aspect in which the numerical controller of the present invention stores operating history information during path table operation.

When the numerical controller is performing path table operation, date and time information 30, reference signal information 31 of path table operation (a signal with the variable value such as time, the principal axis position, another axis position), control data 32 for performing control in synchronization with the reference signal, information 33 representing the state of the numerical controller during sampling are stored in buffer 34 in each predetermined sampling cycle.

The path table operation reference signal information 31 includes a signal indicating time and a signal indicating the position of the specified moving axis or indicating the position of the principal axis. In addition, the position of the control axis controlled in association with the value indicated by the reference signal and the M codes (the codes of the auxiliary functions) are stored in path table provided in memory. Hereinafter, the reference signal value for path table operation will be referred to as 'the reference signal value' and the data of the reference signal will be called 'the reference signal information'.

The control data (synchronized control data) 32, which is controlled in synchronization with the reference signal, includes the position of the control axis that drives moving parts of the machine tool or the like, the principal axis position of the machine tool, and M code instructions output in synchronization with the reference signal (or instructions for the auxiliary functions that NC machine tool have the functions such as to start/stop the rotation of the principal axis, automatic tool exchange, ON/OFF states of coolant).

The information 33 representing the state of the numerical controller includes state information required for specifying (or investigating) the source of alarm generation such as alarm signal information, I/O information, the path table program name, and includes principal axis over ride and time over ride historical information.

Buffer 34 is formed of ring buffer type and buffer 34 cyclically stores, as one set of operating history information, date and time information 30 during sampling which is picked up in each sampling cycle, reference signal information 31, synchronization control data 32, and information 33 representing the state of the numerical controller. As a result, information during a plurality of sampling events for the predetermined period is stored in buffer 34.

When an alarm is generated, operation of the numerical controller is stopped and operating history information stored in buffer 34 is stored in the operating history saving memory 36.

Furthermore, when investigating the source of alarm generation, operating history information stored in operating history saving memory 36 is read by display control means 37 and displayed on a display device 38 or operating history information stored in the operating history saving memory 36 is read by external output means 39 and stored in an external storage device 40.

Operating history information displayed on the display device 38 (date and time information 30, reference signal information 31, synchronization control data 32, and information 33 representing the state of the numerical controller) or operating history information stored in the external storage device 40 is referred to in order to specify the source of alarm generation. In addition, when operating history information stored in the operating history saving memory 36 is displayed on the display device 38 (or when operating history information is stored in the external storage device 40), table format data (path table data) 35 of the program name specified by the information 33 representing the state of the numerical controller which is included in operating history information is read from memory and displayed on the display device 38 (or stored in the external storage device 40 with operating history information).

The displayed data (or the data stored in the external storage device 40) includes reference information when an alarm was generated, synchronization control data for the position of the synchronized control axis, and information of the state of the numerical controller. As a result, the point of alarm generation can be clearly specified even in the case of an alarm that is generated during parameter operation. Furthermore, operating history information during a plurality of sampling events (date and time information 30, reference signal information 31, synchronization control data 32, and information 33 representing the state of the numerical controller) are displayed (and stored) retroactively starting fromwhen the alarm was generated. Hence, it is possible to perform investigation of the source of alarm generation by referring to information and investigation is straightforward.

The operating history saving memory 36 is divided into a plurality of storage areas as shown in Fig. 2 and operating history information stored in the buffer 34 is sequentially stored in these storage areas each time an alarm is generated. Fig. 2 shows an example in which the operating history saving memory 36 is divided into n sections and constituted such that operating history information stored in the buffer 34 is successively stored in the operating history saving memory 1, operating history saving memory 2, ..., and the operating history saving memory n each time an alarm is generated.

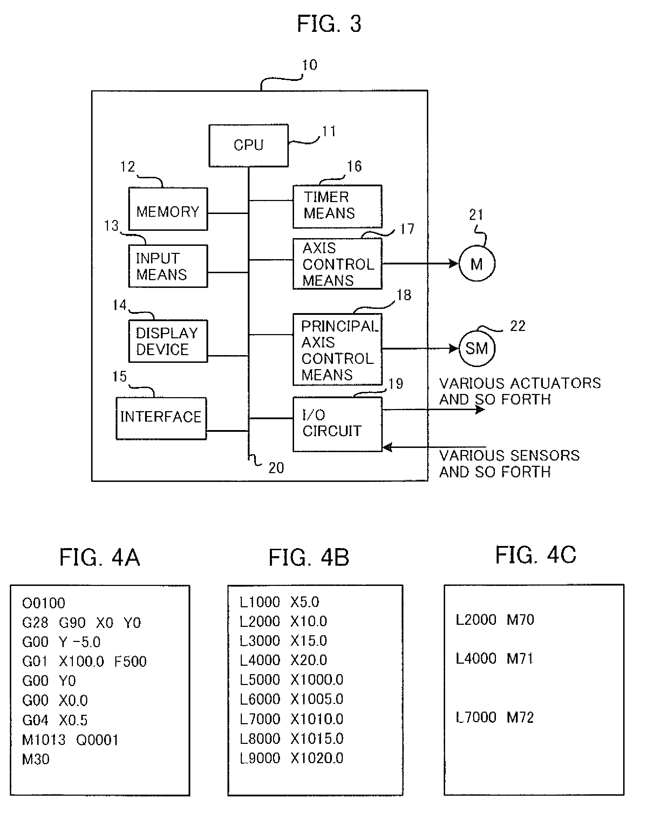

Fig. 3 is the schematic view of an embodiment of the numerical controller that stores information on operating history during path table operation of the present invention.

In Fig. 3, the CPU 11 is the processor that performs overall control of the numerical controller 10. The CPU 11 is connected via a bus 20 to a memory 12, input means 13 constituted by a keyboard and pointing devices or the like, a display device 14 constituted by liquid crystals or CRT or the like, interface 15 for connecting to an external device, timer means 16, axis control means 17 for drive-controlling a servo motor 21 for driving each moving axis of the machine tool, principal axis control means 18 for controlling a principal axis motor 22 of the machine tool, and an I/O circuit 19 that is connected to various actuators and various sensors of the machine tool and peripheral devices.

The memory 12 stores system programs or input the NC program and path tables (table format data) and comprises memory unit that corresponds to the buffer 34 which stores operating history and memory unit that corresponds to the operating history saving memory 36. The axis control means 17 performs position and velocity feedback control on the basis of motion instruction issued by the CPU 11 based on the NC program or the like and the feedback signal from the position/velocity detector that is attached to a servo motor 21, and further performs current feedback control, to drive the servo motor via a servo amplifier. The number of each of the axis control means 17 and the servo motor 21 to be provided are the same as the number of control axes of the machine tool. However, only one of each of axis control means 17 and servo motor 21 is shown in Fig. 3.

Furthermore, the principal axis control means 18 drive-controls the principal axis motor 22 by performing velocity control on the basis of velocity instruction issued by the CPU 11 and the feedback signal from a detector (not shown) for detecting the rotational speed of the principal axis.

The numerical controller 10 is the same as the conventional numerical controller that controls the machine tool or the like in view of constitution but different from the conventional numerical controller in that software such as operating history saving processing software, which captures operating history data during path table operation (described subsequently) in buffer and stores the operating history data in operating history saving memory when an alarm is generated, is stored in the memory 12.

Fig. 4A shows an example of the NC program executed by the numerical controller 10 shown in Fig. 3. In the NC program, 'M1013 Q0001' is an instruction to call the path table and instruct path table operation. Furthermore, Figs. 4B and 4C show the path table format data executed by the numerical controller 10 shown in Fig. 3, where Fig. 4B shows an example of path table format data obtained by setting the position of the control axis (X) to be synchronized with a reference signal so as to match the reference signal value, and Fig. 4C shows an example of path table format data obtained by setting the M code instruction to be output in synchronization with the reference signal (auxiliary function instruction) so as to match the reference signal value.

'L□□□□' in Figs. 4B and 4C represents the reference signal value and 'X□ □□□' represents the position of the control axis driven in synchronization with the reference signal. In Fig. 4B, for example, 'L1000 X5. 0' is an instruction to move the synchronized control axis X to position '5.0' when the reference signal value L reaches '1000'. Furthermore, in Fig. 4C, for example, 'L2000 M70' is an instruction to output an M code M70 when the reference signal value L reaches '2000'.

The CPU 11 of the numerical controller 10 executes the NC program shown in Fig. 4A and drives the principal axis motor 22 and the servo motor 21 of each control axis to drive-control the machine tool. When path table operation instruction 'M1013 Q0001' is read by the NC program, the CPU 11 drive-controls the control axis X in accordance with the reference signal value L (that is, in synchronization with the reference signal L) on the basis of the path table shown in Figs. 4B and 4C corresponding with the instruction 'Q0001' and outputs the M code via the I/O circuit 19 in accordance with the reference signal value L on the basis of the table data of Fig. 4C. Path table operation is thus performed in synchronization with reference signal L. Path table operation itself is the same as conventional path table operation and does not differ therefrom.

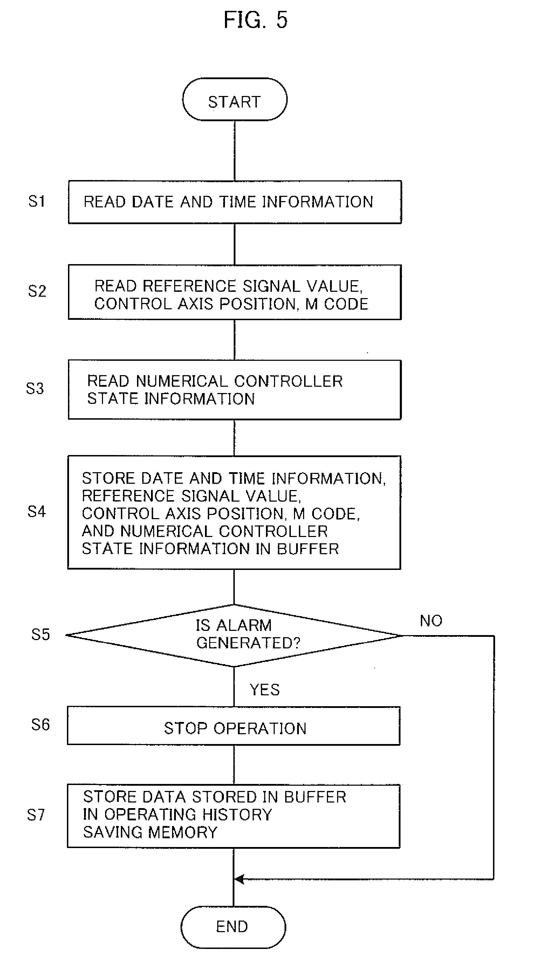

During path table operation, the CPU 11 executes the operating history saving processing shown in Fig. 5 in each predetermined sampling cycle.

First, the CPU 11 reads date and time information from timer means 16 (step S1) and reads the current value of the reference signal (a signal representing the time generated within the numerical controller, a signal indicating the principal axis position, or a signal not shown in Fig. 3 but which represents the position of an axis or moving parts input from the outside), the current position of the control axis (axis of the moving parts, principal axis) synchronized with the reference signal, and the M code being currently output (step S2). The CPU 11 also reads signal information representing the set state of the numerical controller (for example, alarm signal information, I/O signal information, the path table program name, the principal axis override value, and the time override value and so forth) (step S3).

The CPU 11 stores the operating history information thus read (date and time information, reference signal value, control axis position, M codes, and signal information representing the state of the numerical controller) in ring buffer-format memory unit provided in the memory 12 (corresponding to the buffer 34 in Fig. 1) (step S4).

The CPU 11 then judges whether an alarm has been generated (step S5) and, unless an alarm has been generated, ends the processing during sampling. Meanwhile, in cases where an alarm has been generated, the CPU 11 stops operation of the numerical controller (step S6) and stores operating history information stored in ring buffer-format memory unit in operating history saving memory unit provided in nonvolatile memory unit of memory 12 (corresponds to the operating history saving memory 36 in Fig. 1) (step S7). The operating history saving memory unit is also formed of ring buffer type, stores operating history information in cycles and successively stores operating history information retroactively starting from the latest operation history information for the time an alarm was last generated, in the order in which the alarm was generated.

Upon investigating the source of alarm generation when an alarm is generated and operation of the numerical controller is stopped, the source of alarm generation is investigated based on operating history information stored in operating history saving memory unit being displayed on display device 14 or based on operating history information that is transferred to a external storage device via interface 15 and stored in the external storage device.

Therefore, in cases where operating history information is displayed on the display device 14, if alarm information display instruction is input by means of input means 13, the latest operating history information stored in the operating history saving memory unit of memory 12 is read and displayed on the display screen of display device 14. In this case, information to be first displayed is the operating history information at the time of alarm generation.

In addition, only operating history information stored in operating history saving memory unit of memory 12 may be displayed. However, in this embodiment, from a program name of path tables contained in the latest operating history information displayed, the path table format data of the program name stored in memory 12 is read and the path table format data thus read is also displayed.

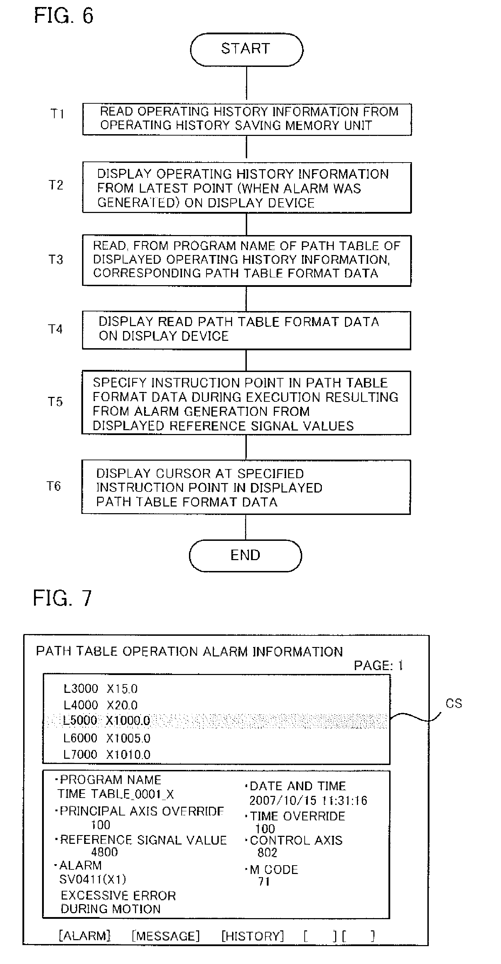

Fig. 6 is the flowchart showing an algorithm for processing to display operating history information stored in operating history saving memory unit of memory 12 on the display device.

The CPU 11 starts processing of Fig. 6 when operating history information display instruction is input by the input means 13. First, the CPU 11 reads operating history information stored in operating history saving memory unit of memory 12 (date and time information, reference signal value control axis position, M codes, and signal information representing the state of the numerical controller) and displays the read information on the display device (steps T1 and T2). In this case, the operating history information is successively displayed retroactively starting from the latest operating history information (when an alarmwas last generated). The CPU 11 reads path table format data of the program name stored in the memory 12 and displayed the read data on the basis of the program name of the executed path table which is contained in the operating history information thus displayed (steps T3 and T4).

Furthermore, the CPU 11 specifies the point of the executed instruction on the path table format data when an alarm is generated, based on the reference signal value of displayed operating history information (step T5) and displays a cursor in the position of the specified instruction point in the displayed path table format data (step T6). When the corresponding instruction point of the path table format data is specified from the reference signal value as mentioned above, the CPU 11 judges whether the displayed reference signal value exists between the reference signal values of the respective instructions of row n and row (n+1) (where n=0,1,2,...) of the path table format data. Further, when the reference signal exists, the CPU 11 assumes that the instruction of row (n+1) at this time is the instruction that is executed when an alarm is generated (the point of the instruction in the path table format data corresponding to the displayed reference signal value) and displays a cursor in that position.

Fig. 7 is an example of operating history information that is displayed on the display screen of the display device 14.

When operating history information display instruction is input, operating history information (date and time information, reference signal value, control axis position, M codes, and signal information representing the state of the numerical controller) picked up during sampling in the state where an alarm is first generated is displayed.

In the example shown in Fig. 7, the program name 'TIME TABLE 0001 X' of the path table which is executed when an alarm is generated, the data pickup date and time (the date and time the alarm was generated) '2007/10/15 11:31:16', the value '100' of the principal axis override, the value '100' of the time override, the reference signal value '4800', the control axis position '802', alarm information 'SV0411 (X1)', and the M code '71' are displayed. In addition, although the state of I/O signal is also displayed, that is omitted from Fig. 7. Although displaying of only these items would be sufficient to investigate the source of alarm generation, table format data of the program name 'TIME TABLE 0001 X' of the path table are read further and displayed in this embodiment.

Furthermore, based on the reference signal value '4800' when an alarm is generated, the cursor CS is displayed in the position of the path table format data 'L5000 X1000.0' of the instruction that is being executed when the alarm is generated. This is because the fact that the reference signal value is '4800' means that the instruction for the path table format data 'L5000 X1000.0' is sampled under execution and therefore cursor CS is displayed in the position 'L5000 X1000.0'.

Additionally, if scroll instruction is input by the input means 13, operating history information that is picked up at each sampling event is displayed on the display screen of the display device 14 retroactively starting with the point that the alarm was generated. Thereupon, in cases where the reference signal value goes back to the position of the value instructed by the path table, the cursor CS is displayed in the data position in the path table format data representing this value.

Fig. 8 shows that operating history information sampled under execution of the instruction 'L3000 X15. 0' is displayed on the screen when scrolling takes place and the cursor CS goes back to the position of the instruction 'L3000 X15. 0' in the path table format data.

Operating history saving memory unit (memory 36 in Fig. 1) of the memory 12 is stored with operating history information which was transferred from the ring buffer-format memory unit (the buffer 34 in Fig. 1) every time an alarm was generated, accumulating a plurality of items of operating history information for a plurality of past alarm generation events. As a result, any operating history information can be displayed on the screen by designating corresponding alarmgeneration event (for example, by designating the number of events to go back from the latest event).

As described hereinabove, because operating history information representing the operating state of the numerical controller is displayed retroactively starting from when an alarm was generated, it is possible to easily specify the source of the alarm generation by referring to the displayed operating history information.

When operating history information stored in the operating history saving memory unit is stored in an external storage device, path table format data corresponding to the program name of the path table stored in each operating history information item is read from the memory 12 and stored with the operating history information.

## Claims

1. A numerical controller that stores a value of a reference signal of a variable value and a position of a control axis conforming to the reference signal value in memory as a path table in order to drive-control the control axis in synchronization with the reference signal and that performs path table operation based on the data stored in the path table to drive-control the control axis in synchronization with the reference signal, the numerical controller comprising:
means for storing, in each predetermined sampling cycle, the reference signal value at the time of sampling and the position of the control axis to be controlled in synchronization with the reference signal inbuffer as operating history information, the buffer accumulating the operating history information for a predetermined period;
an operating history saving memory that stores, when an alarm is generated, the operating history information accumulated in the buffer.

2. The numerical controller according to claim 1, wherein M code information instructed during sampling is also extracted in each of the predetermined sampling cycles and used as the operating history information.

3. The numerical controller according to claim 1, wherein information on a state during sampling of preset terms representing a state of the numerical controller is extracted in each of the predetermined sampling cycles and used as the operating history information.

4. The numerical controller according to claim 3, wherein the preset terms representing the state of the numerical controller include a program name of the path table under execution.

5. The numerical controller for storing the operating history during path table operation according to claim 3, wherein the preset terms representing a state of the numerical controller include the state of I/O signals, a principal axis override value, and a time override value.

6. The numerical controller according to claim 1, further comprising means for reading operating history information stored in the operating history saving memory and causing display means to display the read operating history information.

7. The numerical controller according to claim 4, comprising means for reading operating history information stored in operating history saving memory and causing display means to display the read operating history information, and for reading, from a program name of a path table under execution stored as operating history information, data of the path table of that program name, and causing the display means to display the data of that path table.

8. The numerical controller according to claim 7, wherein a cursor indicates a data item corresponding to the data in the displayed path table, on the basis of the reference signal value in the displayed operating history information.

9. The numerical controller according to claim 1, comprising plural memory for storing operating history and enabling to store many operating history information.
